# EUROPÄISCHE PATENTSCHRIFT

(11) **EP 2 767 421 B1**
(45) Veröffentlichungstag und Bekanntmachung des Hinweises auf die Patenterteilung: **22.06.2016**
(21) Anmeldenummer: 14155040.0
(22) Anmeldetag: 13.02.2014
(51) Int. Cl.: B60G 21/055, B60G 11/50, B60G 11/15

(54) **Drehstabfedersystem für eine Radaufhängung eines Kraftfahrzeugs**
Torsion bar spring system for a wheel suspension of a motor vehicle
Système de ressort à barre de torsion pour la suspension d'un roue d' un véhicule automobile

(30) Priorität: 16.02.2013 DE 102013002713
(43) Veröffentlichungstag der Anmeldung: 20.08.2014
(73) Patentinhaber: AUDI AG, 85045 Ingolstadt (DE)
(72) Erfinder: Mohrlock, Dominik, 85114 Buxheim (DE); Schindler, Andreas, 85055 Ingolstadt (DE); Beringer, Heinrich, 85095 Denkendorf (DE); Schmitt, Joachim, 85051 Ingolstadt (DE)

(56) Entgegenhaltungen:
- EP-A1- 2 508 368
- EP-A2- 1 184 215
- EP-A2- 2 322 366
- DE-A1- 3 734 698
- DE-A1-102004 002 550
- DE-A1-102005 031 414
- DE-A1-102009 005 895
- DE-A1-102009 047 128
- DE-A1-102010 042 223
- DE-B3-102006 061 984
- JP-A- H 023 519
- US-A1- 2005 167 932

## Beschreibung

Die vorliegende Erfindung betrifft eine Drehstabfederanordnung für eine Radaufhängung eines Kraftfahrzeugs gemäß dem Oberbegriff des Patentanspruchs 1.

Eine solche Federungsanordnung ist beispielhaft aus der DE 10 2009 005 899 A1 bekannt. Die Federungsanordnung weist eine mittels eines Aktuators betätigbare Drehstabfeder auf, die sich in der Fahrzeugquerrichtung bis etwa in die Fahrzeugquermitte erstreckt und radseitig auf einen Antriebshebel wirkt, der wiederum an einem Radführungselement der Radaufhängung angelenkt ist. In der DE 10 2009 005 899 A1 ist die Drehstabfeder mehrteilig sowie in verschachtelter Anordnung ausgeführt, bei der zwei radial äußere Hohlstäbe sowie ein radial innenliegender Vollstab aus Federstahl vorgesehen sind, die über zum Beispiel Keilverzahnungen miteinander kraftübertragend verbunden sind.

In der aus der DE 10 2009 005 899 A1 bekannten Drehstabfederanordnung wird die Federarbeit im Wechselspiel der Ein- und Ausfederbewegung des Rades aufgenommen bzw. abgegeben. Gleichzeitig ist es möglich, mittels des Aktuators Momente zu überlagern, das heißt die Drehstabfedern je nach Erfordernis aufzuziehen oder zu entspannen. Durch das Vorhandensein der Tragfeder als eine Hauptfeder müssen mit dem Drehsteller nur anteilig Stellkräfte zur Radlaständerung gestellt werden. Es findet ständig eine Überlagerung der Federkräfte aus Hauptfeder und Drehstabfedertatt, und zwar je nachdem wie die Fahrsituation dies erfordert und die Steuerung dies vorgibt. Am Ausgang der Drehstabfederanordnung befindet sich eine Schwinge, an deren Ende eine Koppel angelenkt ist. Die Koppel verbindet die Schwinge mit dem Trapezlenker, der mit dem Fahrzeugrad verbunden ist. Somit können die im Drehsteller erzeugten Drehmomente über den Lastpfad Motor/Getriebe/ Drehfeder/Schwinge/Koppel/Trapezlenker/Fahrzeugrad letztlich als lineare Stellkräfte auf das Fahrzeugrad übertragen werden.

Bei der oben dargelegten Drehstabfederanordnung setzt sich die Drehstabfeder lediglich aus zwei Komponenten, nämlich aus Rohrfeder und Vollstabfeder, zusammen. Demgegenüber sind die verbleibenden Komponenten im oben erwähnten Lastpfad absolut starr ohne Einfluss auf die Gesamtfederkonstante des Systems ausgelegt. Besteht nun beispielsweise Bedarf, eine weichere Drehstabfeder zu realisieren, so müsste als erste Maßnahme der Durchmesser von Rohrfeder und/oder Vollstabfeder reduziert werden. Mit dem Reduzieren des Durchmessers würde jedoch das Arbeitsvermögen der Drehstabfeder abnehmen und würden gleichzeitig auch die Spannungen überproportional zunehmen, so dass die Rohr- und Stabfeder verlängert werden müssten. Eine solche Längenänderung ist jedoch aufgrund der äußerst kritischen Platzverhältnisse im Bereich der Radaufhängung nicht durchführbar. Dies hat zur Folge, dass insbesondere bei kleineren Fahrzeugbaureihen, bei denen eine Reduzierung der Gesamtfedersteifigkeit unumgänglich ist, ein derartiger Drehsteller aufgrund der hohen Packungsdichte nicht eingebaut werden kann.

Aus der DE 10 2005 031 414 A1 ist ein gattungsgemäßes Drehstabfedersystem bekannt, bei dem der Aktuator über eine drehelastische Lagerung am Fahrzeugaufbau abgestützt ist. Die drehelastische Lagerung ist durch Gummifederelemente realisiert. Aus der DE 10 2006 061 984 B3 ist eine weitere Radaufhängung für ein Kraftfahrzeug bekannt, das eine federelastische Drehstabanordnung aufweist. Aus der DE 10 2009 047 128 A1 ist ein Fahrwerk für ein Fahrzeug bekannt, das zwischen den in Fahrzeugquerrichtung einander gegenüberliegenden Radaufhängungen eine Drehstabfederanordnung aufweist. Gleiches trifft auch auf die DE 10 2009 005 895 A1 zu.

Die Aufgabe der Erfindung ist es, eine Drehstabfederanordnung für eine Radaufhängung eines insbesondere zweispurigen Fahrzeuges bereitzustellen, bei der mit baulich und konstruktiv einfachen Mitteln die Federrate die Drehstabfedern zusätzlich beeinflussbar ist.

Die Aufgabe ist mit den Merkmalen des Patentanspruchs 1 gelöst. Vorteilhafte und besonders zweckmäßige Ausgestaltungen der Erfindung sind in den Unteransprüchen offenbart.

Erfindungsgemäß wird vorgeschlagen, dass das Gehäuse des Aktuators nicht mehr starr ohne Federeigenschaft am Fahrzeugaufbau gelagert ist, sondern federnd nachgiebig an einer fahrzeugaufbauseitigen Lagerstelle mit definierter Federrate gelagert ist. Damit wird in einfacher Weise die Drehstabfeder in Reihenschaltung eine federnde Komponente vorgeschaltet bzw. überlagert, die die Federrate der Federungsanordnung absenkt und die Torsionsbelastungen die Drehstabfedern vermindert.

Gegebenenfalls kann eine geschachtelte Drehstabfederanordnung, bestehend aus einer Rohrfeder und einer Vollstabfeder, mit der federnd elastischen Lagerstelle der Motor-Getriebe-Einheit erweitert werden. Dadurch kann unter Beibehaltung der geometrischen Abmessungen, das heißt der Länge der Drehstabfederanordnung, die Gesamtfederrate nach unten korrigiert werden. Entsprechend kann der Drehsteller auch bei kleineren Fahrzeugbaureihen verbaut werden, in denen eine Reduzierung der Gesamtfedersteifigkeit der Radaufhängung erforderlich ist.

Erfindungsgemäß kann die Motor-Getriebe-Einheit an der Lagerstelle am Fahrzeugaufbau in Umfangsrichtung beweglich gelagert sein und über zumindest ein Federelement in Richtung der an die Drehstabfeder wirkenden Torsionsmomente am Fahrzeugaufbau abgestützt sein. Der erfindungsgemäße Vorschlag bewirkt quasi eine Aufteilung der Drehstabfederanordnung in die Drehstabfeder und in das zusätzliche Federelement, und zwar mit dazwischen geschalteter Motor-Getriebe-Einheit. Die Motor-Getriebe-Einheit bewirkt in üblicher Weise die variable Vorspannung, während das Torsionsmoment von dem Abtriebshebel und die Drehstabfeder auf die Stelleinheit und von deren Gehäuse über das Federelement am Fahrzeugaufbau (oder einem Hilfsrahmen) abgestützt ist. Der besondere Vorteil liegt dabei in einer einfacheren Auslegung der Motor-Getriebe-Einheit in Verbindung mit einer vereinfachten, insbesondere kürzer gestaltbaren Drehstabfeder.

Erfindungsgemäß ist an der Motor-Getriebe-Einheit bzw. an deren Gehäuse zumindest ein radial abragender Hebel befestigt, der zwischen zwei entgegengesetzt angeordneten, am Fahrzeugaufbau abgestützten Federn eingespannt ist. Daraus resultiert eine dynamisch sensible Drehstabfederanordnung mit zum Beispiel in einer Konstruktionslage der Radaufhängung definierter Mittelstellung und hochfrequenter Anpassung der Trimmlage an Ein- und/oder Ausfederbewegungen der Radaufhängung.

Die Federn können bevorzugt durch Schraubendruckfedern und/oder durch gummielastische Puffer gebildet sein. Die Puffer können dabei unter anderem zugleich als progressiv wirkende Federanschläge ausgelegt sein.

In einer alternativen Ausgestaltung der Erfindung besteht das Federelement aus zumindest einer um die Motor-Getriebe-Einheit angeordneten und in beiden Drehrichtungen wirkenden Spiralfeder, deren Federenden am Fahrzeugaufbau und an der Motor-Getriebe-Einheit verankert sind. Die ebenfalls eine definierte Torsionssteifigkeit aufweisende Spiralfeder kann bei geringem zusätzlichen Einbauraum um die verdrehbar gelagerte Motor-Getriebe-Einheit so ausgelegt sein, dass sie aus einer Mittelstellung (Konstruktionslage) heraus Aus- und Einfederbewegungen im Rahmen des vorgegebenen Federweges aufnehmen kann.

Bedingt durch das zusätzliche Federelement an der drehbar gelagerten Motor-Getriebe-Einheit kann die Drehstabfeder einteilig ausgebildet und an ihrem einen Ende mit dem Abtriebshebel und an ihrem anderen Ende mit dem Abtriebselement der Motor-Getriebe-Einheit trieblich verbunden sein. Dies ermöglicht den Einsatz einer einfachen, kostengünstigen Drehstabfeder und eine baulich und fertigungstechnisch einfachere Auslegung der Motor-Getriebe-Einheit, die nicht als Hohlwellenkonstruktion mit innenliegender Drehstabfeder ausgeführt sein muss.

Das zusätzliche Federelement kann eine am Gehäuse der Motor-Getriebe-Einheit befestigte, weitere Drehstabfeder sein, die an ihrem freien Ende am Fahrzeugaufbau abgestützt ist. Die Drehstabfeder kann mit einem Ende mit dem Aktuator-Gehäuse verbunden sein und mit dem anderen Ende an einer Momentenstütze am Fahrzeugaufbau abgestützt sein. Die zum Abtriebshebel geführte erste Drehstabfeder und die an der Momentenstütze abgestützte zweite Drehstabfeder und/oder das zylindrische Gehäuse der Motor-Getriebe-Einheit des Aktuators können koaxial zueinander ausgebildet sind.

Die erste Drehstabfeder und die zweite Drehstabfeder können zudem an gegenüberliegenden Stirnseiten des zylindrischen Gehäuses der Motor-Getriebe-Einheit des Aktuators vorgesehen sein.

Zur Erzielung einer baulich einfachen Konstruktion kann ferner die erste Drehstabfeder einteilig zum Beispiel aus Federstahl ausgeführt sein und an ihrem einen Ende mit dem Abtriebshebel und an ihrem anderen Ende mit dem Abtriebselement der Motor-Getriebe-Einheit trieblich verbunden sein.

Schließlich können an einer Achse des Kraftfahrzeugs (Vorder- und/oder Hinterachse) zwei quer zur Fahrzeuglängsrichtung ausgerichtete Drehstabfederanordnungen vorgesehen sein, wobei deren Motor-Getriebe-Einheiten im Bereich der senkrechten Fahrzeuglängsmittelebene (innenliegend) und die Drehstabfeder bzw. die Drehstabfeder mit dem Abtriebshebel außenliegend dazu positioniert sind. Zudem ist auch eine Ausrichtung der Motor-Getriebe-Einheit in der Längsrichtung möglich.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: eine Draufsicht auf die untere Ebene einer linksseitigen Radaufhängung einer Hinterachse eines Kraftfahrzeugs, mit einem unteren Querlenker, einem Stoßdämpfer und einer Drehstabfederanordnung;
- Fig. 2: ein Ersatzschaltbild der Federungsanordnung nach Fig. 1 mit Darstellung von Einzelfederraten c₁ und c₂, die im Wesentlichen die Gesamtfederrate bestimmen;
- Fig. 3: die Drehstabfederanordnung in einer Seitenansicht;
- Fig. 4: eine weitere Drehstabfederanordnung in einer Ansicht entsprechend der Fig. 3; und
- Fig. 5: eine Drehstabfederanordnung in einer Ansicht entsprechend der Fig. 1.

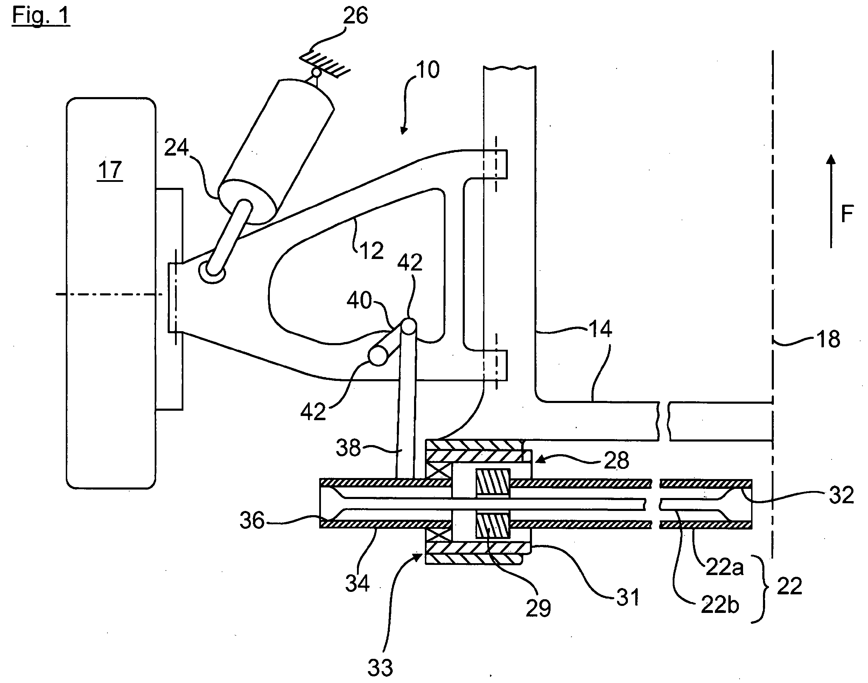

In der Fig. 1 ist mit 10 die untere Ebene einer linksseitigen Radaufhängung für Kraftfahrzeuge bezeichnet, mit einem unteren Querlenker 12, der einerseits an einem nur abschnittsweise dargestellten Hilfsrahmen 14 und andererseits an einem nur angedeuteten Radträger für ein Hinterrad 17 angelenkt ist. Der den Radträger führende obere Lenker ist nicht ersichtlich.

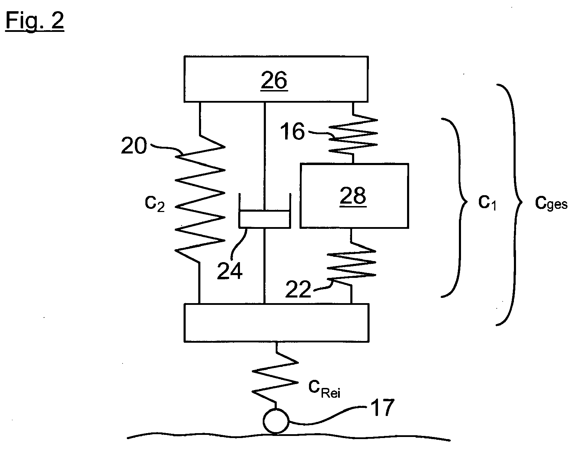

Die in der Fig. 1 gezeigte, linksseitige Radaufhängung weist einen Teleskopstoßdämpfer 24 mit davon getrennter Tragfeder 20 auf, die lediglich in dem Ersatzmodell der Fig. 2 gezeigt ist. Die erfindungsgemäße Federungsanordnung setzt sich gemäß der Fig. 1 aus einer in Fahrzeugquerrichtung verlaufenden Drehstabfeder 22 als Speicherfeder noch zu beschreibender Konstruktion zusammen.

Der Teleskopstoßdämpfer 24 ist an dem unteren Querlenker 12 und oben in nicht näher dargestellter Weise am Aufbau 26 des Kraftfahrzeuges abgestützt, an dem auch der Hilfsrahmen 14 über schwingungsisolierende Lager befestigt ist.

Die Drehstabfeder 22 besteht in der Fig. 1 beispielhaft aus einer radial äußeren Rohrfeder 22a, die ausgehend von einem am Hilfsrahmen 14 befestigten Aktuator 28 sich nach innen nahezu bis zur eingezeichneten, senkrechten Fahrzeuglängsmittelebene 18 erstreckt und dort zum Beispiel über eine Steckverbindung 32 mit einem Vollstab 22b aus Federstahl trieblich verbunden ist.

Der Vollstab 22b verläuft radial innen liegend wieder zur Fahrzeugaußenseite, wobei er sich durch den Aktuator 28 hindurch erstreckt und an einer noch weiter außenliegenden Führungsbuchse 34 über ebenfalls eine Steckverbindung 36 befestigt ist.

Die Führungsbuchse 34 ist in dem Aktuator 28 drehbar gelagert und trägt einen radial zum Querlenker 12 in Fahrtrichtung F des Kraftfahrzeuges nach vorne abragenden Abtriebshebel 38, der über Lagerstellen 42 und eine etwa vertikal ausgerichtete Koppelstange 40 gelenkig mit dem Querlenker 12 verbunden ist.

Der Aktuator 28 ist eine Motor-Getriebe-Einheit, die sich in nur grob mit Bezugsziffer 29 angedeuteter Weise aus einem antreibenden Elektromotor und einem hoch übersetzenden Getriebe (zum Beispiel einem Harmonic-Drive-Getriebe oder einem Zykloidgetriebe) zusammensetzt, wobei das Abtriebselement des Getriebes mit der Rohrfeder 22a trieblich verbunden ist. Die die Federrate mitbestimmende Länge der wirksamen Drehstabfeder 22 bestimmt sich somit kumulativ aus der Länge der Rohrfeder 22a vom Aktuator 28 zur Steckverbindung 32 und der Länge des Vollstabes 22b zwischen den Steckverbindungen 32, 36.

Zusätzlich ist das Gehäuse 31 des Aktuators 28 in Umfangsrichtung beweglich in einer Gleitlagerstelle 33 gelagert und über ein Federelement 16 (Fig. 2 bis 5) in Richtung der an der Drehstabfeder 22 wirkenden Torsionsmomente am Fahrzeugaufbau 26 bzw. am Hilfsrahmen 14 abgestützt. Die Federrate des Federelements 16 ist der Federrate der Drehstabfeder 22 in Reihenschaltung überlagert.

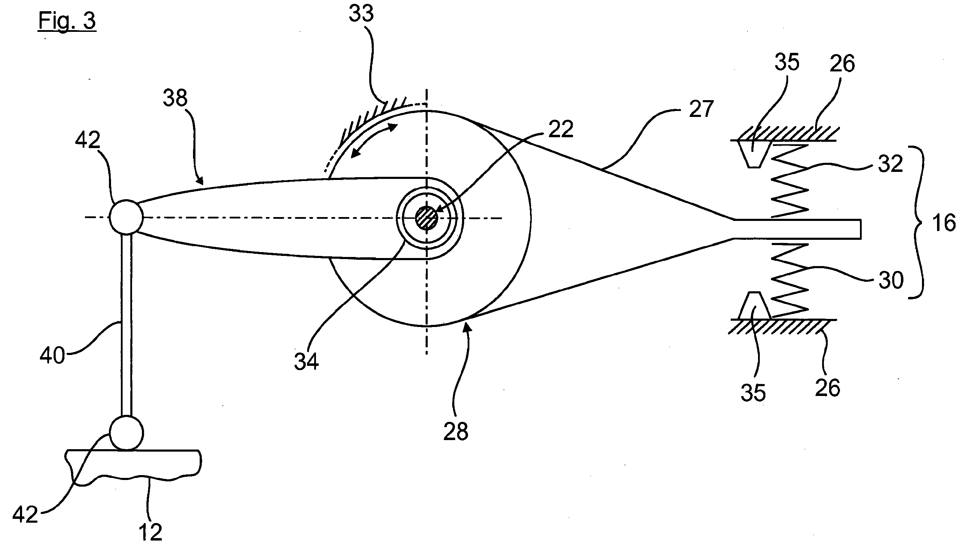

An dem gleitend gelagerten Gehäuse 31 des Aktuators 28 ist gemäß der Fig. 3 ein radial abragender Hebel 27 ausgebildet, der an dessen freiem Ende zwischen zwei Schraubendruckfedern 30, 32 als Federelement 16 eingespannt ist. Die Schraubendruckfedern 30, 32 sind wiederum am Fahrzeugaufbau 26 mit einer definierten Vorspannung abgestützt.

Ferner sind zwischen dem Fahrzeugaufbau 26 und dem Hebel 27 zwei gummielastische Puffer 35 eingesetzt, die als progressiv wirkende Endanschlagpuffer dienen. Der Hebel 27 kann je nach den baulichen Verhältnissen am Fahrzeugaufbau 26 oder am Hilfsrahmen 14 horizontal, vertikal oder schräg ausgerichtet sein.

Die Länge des Hebels 27, die Auslegung der Schraubendruckfedern 30, 32 und die Auslegung der Drehstabfeder 22 bestimmen die Gesamttorsionssteifigkeit bzw. die Federrate der Drehstabfederanordnung, das als Speicherfeder wirkend zur Tragfeder 20 in der Radaufhängung des Kraftfahrzeugs vorgesehen sein kann und sowohl als Stabilisator als auch zur Einstellung des Fahrzeugniveaus und zur Nick- und Wankstabilisierung der Karosserie des Kraftfahrzeugs dient.

Die zwischen der Drehstabfeder 22 und dem Federelement 16 in den Kraftfluss eingeschaltete Motor-Getriebe-Einheit bzw. der Aktuator 28 wirkt dabei durch die Drehlagerung sowohl auf die Drehstabfeder 22 als auch auf das Federelement 16 und ermöglicht bei entsprechender Verstellung über den Aktuator 28 dynamisch sensibel auch bei hochfrequenten Fahrwerksbewegungen angepasste Torsionssteifigkeiten der Drehstabfederanordnung.

Die Fig. 2 zeigt in dem Ersatzschaltbild das Zusammenwirken der Federungsanordnung einer Radaufhängung 10 unter Verwendung der gleichen Bezugszeichen.

Wie ersichtlich ist, sind zwischen dem Aufbau 26 des Kraftfahrzeuges und dem Rad 17 bzw. dem Querlenker 12 die parallel geschalteten Federsysteme c₂ (Tragfeder 20) und c₁ (die Drehstabfeder 22 und in Reihenschaltung das Federelement 16) wirksam, die die Gesamtfederrate c_{ges} bestimmen (eingezeichnet ist der Vollständigkeit halber auch die Federrate c_{Rei} des Rades 17 bzw. dessen Reifens).

Durch die Reihenschaltung die Drehstabfeder 22 mit dem Federelement 16 kann die über den Aktuator 28 gesteuerte Federrate c₁ als Speicherfeder und damit verbunden die Gesamtfederrate c_{ges} vermindert bzw. vorteilhaft an konstruktive Gegebenheiten angepasst werden.

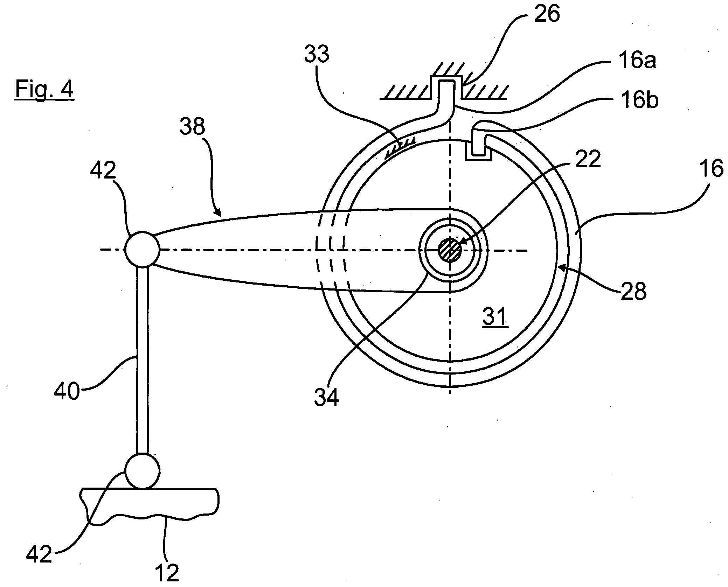

Die Fig. 4 zeigt ein alternatives Ausführungsbeispiel der Erfindung, das nur soweit beschrieben ist, als es sich von der Ausführung gemäß der Fig. 1 wesentlich unterscheidet. Funktionell gleiche Teile sind mit gleichen Bezugszeichen versehen.

Gemäß der Fig. 4 ist das zusätzliche Federelement 16 als eine Spiralfeder ausgebildet, die um die Motor-Getriebe-Einheit des Aktuators 28 herum angeordnet ist und deren abgewinkelte Federenden 16a, 16b am Fahrzeugaufbau 26 und am Gehäuse 31 unter einer definierten Vorspannung in Umfangsrichtung des Gehäuses 31 verankert sind.

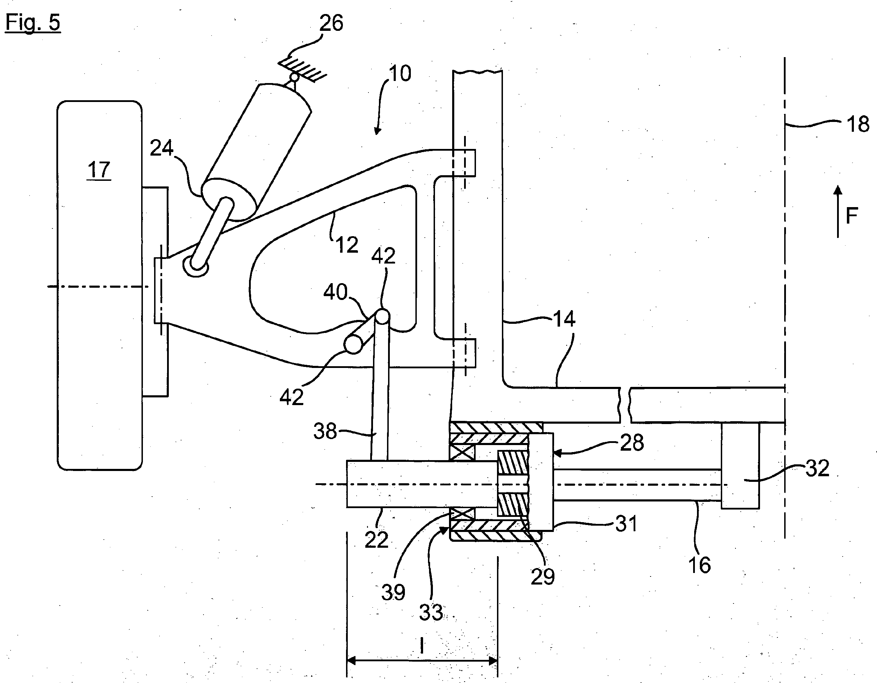

Der Aufbau und die Funktionsweise der in der Fig. 5 gezeigten Drehstabfederanordnung ist im Wesentlichen identisch mit der in den vorangegangenen Figuren gezeigten Drehstabfederanordnung. Von daher wird auf die Beschreibung der Fig. 1 bis 4 verwiesen.

Im Unterschied zu den Fig. 1 bis 4 ist in der Fig. 5 das Federelement 16 als eine Drehstabfeder ausgeführt. Das Gehäuse 31 des Aktuators 28 ist über die Drehstabfeder 16 an einer Momentenstütze 32 des Hilfsrahmens 14 abgestützt. Die zweite Drehstabfeder 16 ist unverdrehbar sowohl am Gehäuse 31 als auch an der Momentenstütze 32 des fahrzeugaufbauseitigen Hilfsrahmens 14 festgelegt. Die Federrate der zweiten Drehstabfeder 16 ist in Reihenschaltung der Federrate der ersten Drehstabfeder 22 überlagert.

Die Länge I und die Auslegung (Werkstoff, Materialstärke, etc.) der ersten Drehstabfeder 22 und der zweiten Drehstabfeder 16 bestimmen die Gesamttorsionssteifigkeit bzw. die Federrate der Drehstabfederanordnung, das als Speicherfeder wirkend zu der Tragfeder 20 in der Radaufhängung des Kraftfahrzeugs vorgesehen sein kann und sowohl als Stabilisator als auch zur Einstellung des Fahrzeugniveaus und zur Nick- und Wankstabilisierung der Karosserie des Kraftfahrzeugs dient. Die zwischen die Drehfederstäbe 22 und 16 in den Kraftfluss eingeschaltete Motor-Getriebe-Einheit des Aktuators 28 wirkt durch ihre Drehlagerung sowohl auf die erste Drehstabfeder 22 als auch auf die zweite Drehstabfeder 16 und ermöglicht bei entsprechender Verstellung über die Motor-Getriebe-Einheit des Aktuators 28 dynamisch sensibel auch bei hochfrequenten Fahrwerksbewegungen entsprechend angepasste Torsionssteifigkeiten der Drehstabfederanordnung.

## Patentansprüche

1. Drehstabfederanordnung für eine Radaufhängung eines Kraftfahrzeugs, mit einem, die Drehstabfederanordnung variabel vorspannenden, am Fahrzeugaufbau (26) oder an einem Hilfsrahmen (14) angeordneten Aktuator (28) und einer koaxialen ersten Drehstabfeder (22), die abtriebsseitig über einen Abtriebshebel (38) mit einem Radaufhängungselement (12) der Radaufhängung verbunden ist, wobei ein Gehäuse (31) des Aktuators (28) am Fahrzeugaufbau (26) in zumindest einer Lagerstelle (33) in Umfangsrichtung beweglich gelagert ist und über zumindest ein Federelement (16) in Richtung der an der Drehstabfeder (22) wirkenden Torsionsmomente am Fahrzeugaufbau (26) federnd nachgiebig abgestützt ist, **dadurch gekennzeichnet, dass** an dem Gehäuse (31) des Aktuators (28) ein radial abragender Hebel (27) befestigt ist, der zwischen zwei entgegengesetzt angeordneten, am Fahrzeugaufbau (26) abgestützten Federn als Federelemente (16) eingespannt ist, oder dass das Federelement (16) eine um den Aktuator (28) angeordnete und in beiden Drehrichtungen wirkende Spiralfeder ist, deren Federenden (16a, 16b) am Fahrzeugaufbau (26) und am Gehäuse (31) des Aktuators (28) verankert sind.

2. Drehstabfederanordnung nach Anspruch 1, **dadurch gekennzeichnet, dass** die Federn durch Schraubendruck- oder -zugfedern (30; 32) und/oder durch gummielastische Puffer (35) gebildet sind.

3. Drehstabfederanordnung nach Anspruch 1, **dadurch gekennzeichnet, dass** das Gehäuse (31) des Aktuators (28) über das Federelement (16) an einer Momentenstütze des Fahrzeugaufbaus (26) angebunden ist.

4. Drehstabfederanordnung nach Anspruch 3, **dadurch gekennzeichnet, dass** das Federelement (16) eine zweite Drehstabfeder ist, die mit einem Ende mit dem Gehäuse (31) verbunden ist und mit dem anderen Ende über die Momentenstütze am Fahrzeugaufbau (26) abgestützt ist.

5. Drehstabfederanordnung nach Anspruch 4, **dadurch gekennzeichnet, dass** die erste Drehstabfeder (22), die zweite Drehstabfeder (16) und/oder das Gehäuse (31) des Aktuators (28) koaxial zueinander ausgebildet sind.

6. Drehstabfederanordnung nach einem der Ansprüche 4 oder 5, **dadurch gekennzeichnet, dass** die erste Drehstabfeder (22) und die zweite Drehstabfeder (16) an gegenüberliegenden Stirnseiten des Gehäuses (31) des Aktuators (28) vorgesehen sind.

7. Drehstabfederanordnung nach einem der vorhergehenden Ansprüche, **dadurch gekennzeichnet, dass** das Federelement (16) aus einem zur ersten Drehstabfeder (22) unterschiedlichen Werkstoff gefertigt ist.

8. Drehstabfederanordnung nach einem der vorhergehenden Ansprüche, **dadurch gekennzeichnet, dass** die Drehstabfeder (22) einteilig ausgebildet ist und an ihrem einen Ende mit dem Abtriebshebel (38) und an ihrem anderen Ende mit einem Abtriebselement des Aktuators (28) trieblich verbunden ist.

9. Drehstabfederanordnung nach einem der vorhergehenden Ansprüche, **dadurch gekennzeichnet, dass** an einer Achse des Kraftfahrzeugs zwei quer zur Fahrzeuglängsrichtung ausgerichtete Drehstabfederanordnungen vorgesehen sind, wobei deren Aktuatoren (28) im Bereich der senkrechten Fahrzeuglängsmittelebene (18) drehbar gelagert sind und die Drehstabfedern (22) mit den Abtriebshebeln (38) außenliegend dazu positioniert sind.

## Claims

1. A torsion bar spring assembly for a wheel suspension of a motor vehicle, comprising an actuator (28) that pretensions the torsion bar spring assembly in a variable manner and is located on the vehicle body (26) or on an auxiliary frame (14), and a coaxial first torsion bar spring (22) that is connected on the output side to a wheel suspension member (12) of the wheel suspension via an output lever (38), wherein a housing (31) of the actuator (28) is movably supported on the vehicle body (26) in at least one support position (33) in the circumferential direction and is spring-elastically supported on the vehicle body (26) via at least one spring member (16) in the direction of the torsion moments acting on the torsion bar spring (22), **characterised in that** on the housing (31) of the actuator (28), a radially protruding lever (27) is fixed that is clamped between two oppositely arranged springs supported on the vehicle body (26) as spring members (16), or **in that** the spring member (16) is a coil spring disposed around the actuator (28) and acting in both rotary directions, the spring ends (16a, 16b) of which coil spring are anchored to the vehicle body (26) and to the housing (31) of the actuator (28).

2. The torsion bar spring assembly as claimed in claim 1, **characterised in that** the springs are formed by helical compression or tension springs (30; 32) and/or by rubber-elastic buffers (35).

3. The torsion bar spring assembly as claimed in claim 1, **characterised in that** the housing (31) of the actuator (28) is tied to a torque support of the vehicle body (26) via the spring member (16).

4. The torsion bar spring assembly as claimed in claim 3, **characterised in that** the spring member (16) is a second torsion bar spring that is connected at one end to the housing (31) and is supported at the other end on the vehicle body (26) via the torque support.

5. The torsion bar spring assembly as claimed in claim 4, **characterised in that** the first torsion bar spring (22), the second torsion bar spring (16) and/or the housing (31) of the actuator (28) are formed coaxially relative to each other.

6. The torsion bar spring assembly as claimed in claim 4 or 5, **characterised in that** the first torsion bar spring (22) and the second torsion bar spring (16) are provided on opposite end sides of the housing (31) of the actuator (28).

7. The torsion bar spring assembly as claimed in any one of the preceding claims, **characterised in that** the spring member (16) is made from a material that differs from that of the first torsion bar spring (22).

8. The torsion bar spring assembly as claimed in any one of the preceding claims, **characterised in that** the torsion bar spring (22) is formed in one piece and is in drive connection at one end thereof with the output lever (38) and with the other end thereof with an output member of the actuator (28).

9. The torsion bar spring assembly as claimed in any one of the preceding claims, **characterised in that** on one axle of the motor vehicle, two torsion bar spring assemblies orientated transversely to the longitudinal direction of the vehicle are provided, the actuators (28) of which torsion bar spring assemblies are rotationally supported in the area of the vertical longitudinal central plane (18) of the vehicle and the torsion bar springs (22) are positioned with the output levers (38) located outwardly therefrom.

## Revendications

1. Dispositif de ressort à barre de torsion pour une suspension de roue d'un véhicule automobile, avec un actionneur (28) qui précontraint de manière variable le dispositif de ressort à barre de torsion et qui est agencé sur la carrosserie de véhicule (26) ou sur un faux-châssis (14) et avec un premier ressort à barre de torsion (22) coaxial qui est relié côté sortie à un élément de suspension de roue (12) de la suspension de roue par l'intermédiaire d'un levier de sortie (38), un carter (31) de l'actionneur (28) étant logé, mobile en direction circonférentielle, sur la carrosserie de véhicule (26) en au moins un point d'appui (33) et étant soutenu sur la carrosserie de véhicule (26), de manière flexible comme un ressort dans la direction des moments de torsion agissant sur le ressort à barre de torsion (22), par l'intermédiaire d'au moins un élément formant ressort (16), **caractérisé en ce qu'**un levier (27) qui dépasse radialement et qui est encastré entre deux ressorts agencés à l'opposé l'un de l'autre et appuyés à la carrosserie de véhicule (26) comme éléments formant ressorts (16) est fixé au carter (31) de l'actionneur (28) ou **en ce que** l'élément formant ressort (16) est un ressort spiral qui est agencé autour de l'actionneur (28), qui agit dans les deux sens de rotation et dont les extrémités de ressort (16a, 16b) sont ancrées sur la carrosserie de véhicule (26) et sur le carter (31) de l'actionneur (28).

2. Dispositif de ressort à barre de torsion selon la revendication 1, **caractérisé en ce que** les ressorts sont formés par des ressorts cylindriques de compression ou de traction (30; 32) et/ou par des tampons élastiques (35).

3. Dispositif de ressort à barre de torsion selon la revendication 1, **caractérisé en ce que** le carter (31) de l'actionneur (28) est rattaché par l'intermédiaire de l'élément formant ressort (16) à un support de moments de la carrosserie de véhicule (26).

4. Dispositif de ressort à barre de torsion selon la revendication 3, **caractérisé en ce que** l'élément formant ressort (16) est un deuxième ressort à barre de torsion qui est relié par une extrémité au carter (31) et par l'autre extrémité à la carrosserie de véhicule (26) par l'intermédiaire des supports de moments.

5. Dispositif de ressort à barre de torsion selon la revendication 4, **caractérisé en ce que** le premier ressort à barre de torsion (22), le deuxième ressort à barre de torsion (16) et/ou le carter (31) de l'actionneur (28) sont conçus coaxiaux les uns par rapport aux autres.

6. Dispositif de ressort à barre de torsion selon l'une des revendications 4 ou 5, **caractérisé en ce que** le premier ressort à barre de torsion (22) et le deuxième ressort à barre de torsion (16) sont prévus sur des côtés frontaux opposés du carter (31) de l'actionneur (28).

7. Dispositif de ressort à barre de torsion selon l'une des revendications précédentes, **caractérisé en ce que** l'élément formant ressort (16) est fabriqué en un matériau différent de celui du premier ressort à barre de torsion (22).

8. Dispositif de ressort à barre de torsion selon l'une des revendications précédentes, **caractérisé en ce que** le ressort à barre de torsion (22) est conçu d'une seule pièce et est relié par l'une de ses extrémités au levier de sortie (38) et par l'autre de ses extrémités à un élément de sortie de l'actionneur (28).

9. Dispositif de ressort à barre de torsion selon l'une des revendications précédentes, **caractérisé en ce qu'**il est prévu sur un essieu du véhicule automobile deux dispositifs de ressort à barre de torsion orientés transversalement par rapport à la direction longitudinale du véhicule, les actionneurs (28) de ceux-ci étant logés de manière à pouvoir tourner dans la zone du plan médian longitudinal perpendiculaire (18) du véhicule et les ressorts à barre de torsion (22) étant positionnés avec les leviers de sortie (38) à l'extérieur.
